# EUROPEAN PATENT SPECIFICATION

(11) **EP 1 127 842 B1**
(45) Date of publication and mention of the grant of the patent: **14.11.2007**
(21) Application number: 01301563.1
(22) Date of filing: 21.02.2001
(51) Int. Cl.: C01B 31/04

(54) **Carbon material comprising particles having a coarsely granular surface and process for the production thereof**
Teilchen mit einer groben granularen Oberfläche enthaltendes Kohlenstoffmaterial und Verfahren zu seiner Herstellung
Matériau carboné comprenant des particules ayant une surface grossièrement granuleuse et procédé pour sa fabrication

(30) Priority: 21.02.2000 JP 2000042185
(43) Date of publication of application: 29.08.2001
(73) Proprietor: MITSUBISHI GAS CHEMICAL COMPANY, INC., Tokyo 100-0005 (JP)
(72) Inventor: Sakamoto, Hitoshi, c/o Tsukuba Research Institute, 22, Wadai, Tsukuba-shi, Ibaragi-ken (JP); Kanno, Koichi, c/o Tsukuba Research Institute, 22, Wadai, Tsukuba-shi, Ibaragi-ken (JP); Tsuruya, Hirotaka, c/o Tsukuba Research Institute, 22, Wadai, Tsukuba-shi, Ibaragi-ken (JP); Sakai, Yukio, c/o Mitusbishi Gas Chemical Co., Inc, Kuraishiki-shi, Okyama-ken (JP)
(74) Representative: Woods, Geoffrey Corlett

(56) References cited:
- EP-A- 0 575 748
- US-A- 5 779 880
- PATENT ABSTRACTS OF JAPAN vol. 015, no. 034 (C-0799), 28 January 1991 (1991-01-28) & JP 02 271908 A (KAWASAKI STEEL CORP), 6 November 1990 (1990-11-06)
- PATENT ABSTRACTS OF JAPAN vol. 008, no. 241 (C-250), 6 November 1984 (1984-11-06) & JP 59 122587 A (FUJI SUTANDAADO RESEARCH KK), 16 July 1984 (1984-07-16)
- PATENT ABSTRACTS OF JAPAN vol. 015, no. 440 (C-0883), 11 November 1991 (1991-11-11) & JP 03 187908 A (NIPPON CARBON CO LTD), 15 August 1991 (1991-08-15)
- PATENT ABSTRACTS OF JAPAN vol. 1999, no. 10, 31 August 1999 (1999-08-31) & JP 11 139816 A (MITSUBISHI GAS CHEM CO INC), 25 May 1999 (1999-05-25)

## Description

The present invention relates to a carbon material having a special shape for use as a raw material for a variety of carbon material products and a process for the production thereof.

Carbon material products are utilized in remarkably broad regions, that is, they are utilized for electrochemistry such as a fuel cell or an electrode for electro-dischage machining, electricity such as a current collector, metallurgy such as a crucible or a boat material, and machines such as sealing and further utilized for a nuclear reactor, activated carbon and the like. Therefore, developments thereof are further proceeded.

Conventionally, carbon material products are usually produced by mixing an aggregate coke with a binder and molding, calcinating or graphitizing the mixture. In this case, the mixing of the aggregate coke and the binder complicates working steps and worsens a working environment. In addition, since the aggregate coke itself is porous and since coal tar pitch or synthetic resins used as a binder cause many pores during the calcinating, it is difficult to produce a high-density carbon material product.

Under the above circumstances, the production of a high-density carbon material without using a binder is under study. As a method of producing a high-density carbon material without a binder, JP-B-60-25364 discloses a method comprising heat-treating coal tar pitch, separating optically anisotropic small spheres with a solvent in the above heat-treatment step, and then, calcinating the optically anisotropic small spheres under an inert gas atmosphere. JP-B-1-27968 discloses a method comprising separating a solid matter from a reaction product obtained by heat-treating coal tar with a centrifugal separator and washing the solid matter to produce fine carbon particles. JP-B-3-61604 discloses a method comprising heat-treating coal tar pitch, carrying out an extraction with a solvent, carrying out a filtration and calcinating insolubles under an inert gas atmosphere.

Further, JP-A-7-286181 discloses a use of a sloped reactor for continuously producing a granular or powdery heat-treated product such as pitch or heavy oil.

JP-A-2271908 relates to the preparation of a high-density and high-strength carbon material. At the time of mixing self-sintering carbonaceous mesophane microbeads, carbon powder and a caking agent, the caking agent is dissolved into an organic solvent, and the solution is mixed with the materials.

JP-A-3187908 relates to an improvement in electrical conductivity and dispersion stability by coating the surface of spherical particles comprising phenol resin or naphthalene resin with bulk mesophane pitch by mechanochemical method, heat-treating and burning under given conditions.

US-A-5779880 relates to an electrorheological fluid constituted by a dispersed phase of a carbonaceous powder having an oxygen content above 10% by weight but not more than 20% by weight and having an average particle diameter of 0.01 to 100µm.

EP-A-575748 relates to self-adhesive carbonaceous grains having a ratio of hydrogen to carbon atoms of from 0.48 to 0.59 and a ratio of oxygen to carbon atoms of from 0.01 to 0.10.

Conventional production methods of a high-density carbon material can give optically anisotropic small spheres (mesophase carbon micro beads) or fine carbon particles. In these methods, however, a great deal of thermal energy is required and steps of separating and washing are complicated. Therefore, these methods are industrially disadvantageous. Further, since spheric materials have a small specific surface area, it is difficult to mold the spheric materials so that it is difficult to obtain a high-density carbon material. Furthermore, fine carbon particles involves dusting to a large extent, which worsen handling properties, and it is therefore difficult to efficiently obtain a high-density carbon material.

The present inventors have made diligent studies with regard to a carbon material having the above problems. As a result, it is found that a carbon material comprising particles having a coarsely granular surface is easily obtained by stirring precedently-heated carbonaceous particles and adding mesophase pitch in driblets under a slightly-oxidizing atmosphere. The carbon material comprising particles having a coarsely granular surface is almost free from dusting and excellent in handling properties so that a carbon material product can be efficiently produced.

It is an object of the present invention to provide a carbon material having a shape suited for effectively obtaining a variety of carbon material products and a process for the production thereof.

According to the present invention, there is provided a carbon material derived from mesophase pitch as a main raw material, which carbon material comprises particles which consist of a core particle and at least two granular carbonaceous projections therefrom, the projections having a diameter not more than the minimum particle diameter, the carbon material having an oxygen content of 0.1 % by weight or more.

According to the present invention, further, there is provided a process for the production of a carbon material, which process comprises:
(a) heating carbonaceous particles to from 200 to 600°C under an inert gas atmosphere with stirring;
(b) changing the inert gas atmosphere to an oxidizing atmosphere containing at least 0.1% by mole of oxygen and/or NO_{2;}
(c) adding mesophase pitch in a solid state or a molten state into the carbonaceous particles while stirring, and
(d) stirring the thus obtained mixture at a temperature of from 200 to 600°C.

Typically, in the process of the present invention, the carbon material is continuously produced by continuing adding the mesophase pitch.

Further, in the process of the present invention, the carbon material can be continuously produced by continuing adding the carbonaceous particles together with the continuous addition of the mesophase pitch.

In the process of the present invention, the carbonaceous particles are typically produced from the mesophase pitch.

Further, in the process of the present invention, the carbonaceous particles are typically formed of a carbonaceous substance which is not molten at a temperature other than a temperature where the mesophase pitch is produced.
Fig. 1 shows an example of a batch reactor used for producing the carbon material comprising particles having a coarsely granular surface, provided by the present invention.
Fig. 2 shows an example of a continuous reactor used for producing the carbon material comprising particles having a coarsely granular surface, provided by the present invention.
Fig. 3 shows a scanning electron micrograph of the carbon material comprising particles having a coarsely granular surface, obtained in Example 1.

The mesophase pitch used as a raw material in the present invention can be selected from petroleum pitch, coal pitch or synthetic pitch. Of these, there is preferably used synthetic pitch obtained by polymerizing a condensed polycyclic aromatic hydrocarbon such as naphthalene, methylnaphthalene, anthracene, phenanthrene, acenaphthene, acenaphthylene or pyrene, or a material containing a condensed polycyclic aromatic hydrocarbon in the coexistence of hydrogen fluoride and boron trifluoride. The above mesophase pitch preferably has a softening point of at least 150°C according to a flow tester method and an optically anisotropic content of at least 50 % according to observation with a polarizing microscope.

The carbon material comprising particles having a coarsely granular surface, provided by the present invention, is produced by stirring precedently-heated carbonaceous particles and adding the above mesophase pitch in driblets thereto under a slightly-oxidizing atmosphere. The carbonaceous particles to be used include not only carbonaceous particles derived from the mesophase pitch but also natural products such as coconut shell charcoal or wood charcoal or carbonaceous particles which are not molten at a production temperature such as resin charcoal or coke.

The carbonaceous particles used for producing the carbon material comprising particles having a coarsely granular surface, provided by the present invention, typically have a particle diameter of 30 to 1,000µm, preferably 100 to 600µm. The heating temperature applied when the carbonaceous particles are stirred differs depending upon the kind of the carbonaceous particles to be used, while it is generally 200 to 600°C, preferably 300 to 500°C, under normal pressure.

The concentration of oxygen in a slightly-oxidizing atmosphere when the mesophase pitch is added is at least 0.1 % by mole, preferably 1 to 25 % by mole.

As a gas for the slightly-oxidizing atmosphere, there is preferably used a nitrogen gas or argon gas containing at least 0.1 % by mole of oxygen or NO₂. Further, there can be used a gas prepared by diluting air, oxygen or NO₂ with a gas such as nitrogen, argon or carbon dioxide.

When the mesophase pitch is added to heated and stirred carbonaceous particles under such a slightly-oxidizing atmosphere, a carbon material obtained is converted to an infusible carbon material, whereby there is obtained a carbon material comprising particles having a coarsely granular surface which material is almost free from dusting and excellent in handling properties.

The oxygen content in the carbon material comprising particles having a coarsely granular surface, provided by the present invention, is at least 0.1 % by weight, preferably 0.3 to 15 % by weight.

In the production process of the carbon material comprising particles having a coarsely granular surface, provided by the present invention, the carbon material comprising particles having a coarsely granular surface can be produced by newly adding carbonaceous particles together with the mesophase pitch during its production. The carbonaceous particles to be added are not limited to those carbonaceous particles which are derived from mesophase pitch, and carbonaceous particles which are not molten at a production temperature can be selected depending upon a use as required. In this case, when carbonaceous particles which are not derived from mesophase pitch are added, there is obtained a carbon material comprising particles having a coarsely granular surface which material is composed of the above carbonaceous particles and the mesophase pitch. Thus, the present invention provides a carbon material according to the invention, which is composed of the mesophase pitch and carbonaceous particles which are not molten at a temperature below that at which the mesophase pitch is produced. Also provided is a carbon material according to the invention, which is composed of the mesophase pitch and carbonaceous particles obtained from the mesophase pitch.

When only the addition of the mesophase pitch is continued and no carbonaceous particles are newly added, there is finally obtained a carbon material comprising particles having a coarsely granular surface which material is entirely derived from the mesophase pitch. Thus, the present invention also provides a carbon material according to the invention, which is composed of the mesophase pitch. In this case, when mesophase pitch containing little impurities is used as a raw material mesophase pitch, there can be obtained a remarkable high-purity carbon material comprising particles having a coarsely granular surface so that steps to follow, such as decarbonization, can be omitted.

As a reactor used for producing the carbon material comprising particles having a coarsely granular surface, there is used a reactor which can fully stir carbonaceous particles. In a batch method, a tank type reactor (e.g., a tank type sloped reactor disclosed in JP-A-7-286181) is used as the above reactor. And in a continuous method, a barrel type reactor comprising paddles or a rotary kiln is used.

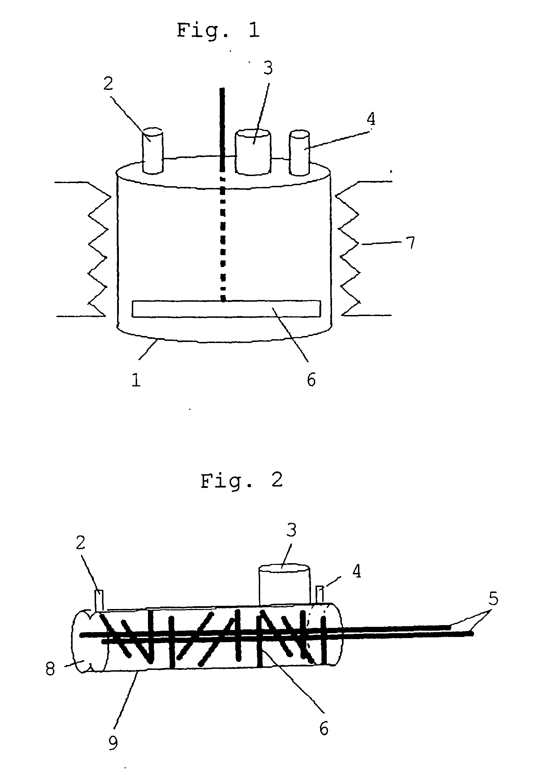

Fig.1 shows a batch reactor used for producing the carbon material comprising particles having a coarsely granular surface, provided by the present invention. The carbon material comprising particles having a coarsely granular surface is produced by precedently heating carbonaceous particles, introducing a slightly-oxidizing atmosphere thereto and adding mesophase pitch and optional carbonaceous particles from the top portion while stirring with stirring paddles.

Fig.2 shows a continuous reactor comprising a barrel type reactor. The barrel type reactor has a sloped structure in which the upstream side is the lower side and an opening for atmosphere gas introduction and an opening for intake of mesophase pitch and carbonaceous particles are disposed at the upstream side. While the mesophase pitch and the carbonaceous particles or the mesophase pitch alone pass(es) through the barrel type reactor with being stirred with stirring paddles, the carbon material comprising particles having a coarsely granular surface is produced.

Symbols in drawings have the following meanings; 1: a tank type reactor, 2: an outlet for exhaust gas, 3: an opening for intake of carbonaceous particles and mesophase pitch, 4: an opening for introducing an atmosphere gas, 5: rotating shafts, 6: stirring paddles, 7: an electrical heater, 8: a products outlet and 9: a barrel type reactor.

According to the method of the present invention, mesophase pitch as a raw material is molten on a carbonaceous particle surface, increased in viscosity and made infusible, whereby a carbon material comprising particles having a coarsely granular surface is formed. The above melting, the increase in viscosity and the impartment of infusibility are carried out at the same time or successively depending upon the pitch to be used. In either case, there is obtained a homogenous carbon material. Further, the particle diameter of a carbon material to be produced can be freely controlled by properly selecting the particle diameter of carbonaceous particles, the addition rate of mesophase pitch, and the rate of stirring. Therefore, the features of the present production process are as follows. A carbon material comprising particles having a coarsely granular surface can be directly produced by a continuos method or a batch method without using any special shaping method. Further, the particle diameter can be freely controlled in production, and there can be produced a carbon material comprising particles having a coarsely granular surface which material has a uniform particle diameter distribution.

The carbon material comprising particles having a coarsely granular surface, provided by the present invention, is already substantially insoluble in a solvent when it is produced, and the carbon material of the present invention is not molten by heating it. The carbon material of the present invention can be used as it is depending upon a use. Otherwise, it can be used after calcination and graphitization. Treatments for the carbon material of the present invention after its production can be freely selected depending upon a purpose.

The carbon material comprising particles having a coarsely granular surface, provided by the present invention, is free from powdering and dusting and is excellent in handling properties. In addition, due to its large specific surface area, the carbon material comprising particles having a coarsely granular surface, provided by the present invention, has a practicable shape and practicable physical properties as raw material for a variety of carbon material products. Therefore, a variety of carbon material products can be produced effectively.

Further, according to the production process of the present invention, it is possible to easily produce a carbon material comprising particles having a coarsely granular surface with controlling the shape and the particle diameter thereof.

Therefore, the present invention is industrially remarkably excellent, and the present invention has significant industrial values.

### Examples

The present invention will be explained more in detail with reference to Examples hereinafter, while the present invention shall not be limited to these.

### Example 1

Mesophase pitch (softening point: 230°C, optically anisotropic content 100 % by weight) obtained by polymerizing naphthalene in the coexistence of hydrogen fluoride and boron trifluoride was heat-treated at 530°C under a nitrogen atmosphere, to obtain carbonaceous particles (average particle diameter 100 µm). 200 g of the carbonaceous particles were placed in a tank type reactor having a diameter of 200 mm and a height of 200 mm, shown in Fig.1, and heated up to 450°C under a nitrogen atmosphere with stirring. Then, the nitrogen atmosphere was changed to an air atmosphere. Mesophase pitch prepared in a pellet state so as to have a diameter of 1.5 mm and a length of 5 mm in advance was added thereto at a rate of 10 g per minute until 300 g of the mesophase pitch was added. After the completion of addition, the atmosphere was changed to a nitrogen atmosphere, and the heater was turned off, to cool the contents. The contents were taken out, to obtain 500 g of a carbon material comprising particles having a coarsely granular surface and having an average particle diameter of 2.5 mm.

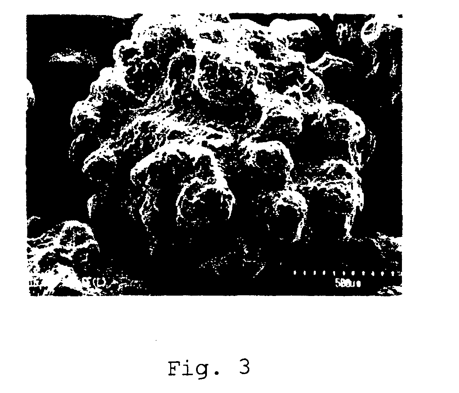

The so-obtained carbon material had an oxygen content of 13 % by weight. When the carbon material was shaken in a sample tube, the carbon material showed no powdering and no dusting. The carbon material was excellent in fluidity. Fig. 3 shows a scanning electron micrograph of the carbon material.

### Example 2

Example 1 was repeated except that the air atmosphere was replaced with a nitrogen atmosphere containing 0.5 % by mole of oxygen. As a result, there was obtained 450 g of carbon material comprising particles having a coarsely granular surface and having an average particle diameter of 3 mm. The carbon material had an oxygen content of 0.5 % by weight. When the carbon material was shaken in a sample tube, the carbon material showed no powdering and no dusting. The carbon material was excellent in fluidity.

### Example 3

Example 2 was repeated except that the addition rate of the mesophase pitch in a pellet state was changed to 5g per minute. As a result, there was obtained 440 g of a carbon material comprising particles having a coarsely granular surface and having an average particle diameter of 1.5 mm. The carbon material had an oxygen content of 5 % by weight. When the carbon material was shaken in a sample tube, the carbon material showed no powdering and no dusting. The carbon material was excellent in fluidity.

### Example 4

Example 1 was repeated except that the air atmosphere was replaced with nitrogen containing 5 % of NO₂. As a result, there was obtained 440 g of a carbon material comprising particles having a coarsely granular surface. The carbon material had an oxygen content of 8 % by weight. When the carbon material was shaken in a sample tube, the carbon material showed no powdering and no dusting. The carbon material was excellent in fluidity.

### Example 5

Example 1 was repeated except that the treatment temperature was changed from 450°C to 550°C. As a result, there was obtained 470 g of a carbon material comprising particles having a coarsely granular surface and having an average particle diameter of 2.5 mm. The carbon material had an oxygen content of 10 % by weight. When the carbon material was shaken in a sample tube, the carbon material showed no powdering and no dusting. The carbon material was excellent in fluidity.

### Example 6

Mesophase pitch (softening point: 230°C, optically anisotropic content 100 % by weight) obtained by polymerizing naphthalene in the coexistence of hydrogen fluoride and boron trifluoride was heat-treated at 530°C under a nitrogen atmosphere, to obtain carbonaceous particles having an average particle diameter of 100 µm.

200 g of the carbonaceous particles was placed in a barrel type reactor composed of two cylinders having a diameter of 150 mm and a length of 600 mm each, shown in Fig.2, and the carbonaceous particles were heated up to 550°C under a nitrogen atmosphere with stirring. Then, the atmosphere was changed to an air atmosphere, and mesophase pitch prepared in a pellet state so as to have a diameter of 1.5 mm and a length of 5 mm in advance was added at a rate of 10 g per minute.

While the mesophase pitch was continuously added, the reaction system was continuously operated at a treatment temperature of 550°C for eight hours. As a result, a carbon material comprising particles having a coarsely granular surface and having an average particle diameter of 2 mm was ejected at a rate of 9 g per minute. The so-obtained carbon material had an oxygen content of 12 % by weight. When the carbon material was shaken in a sample tube, no powdering and no dusting were observed. The carbon material was excellent in fluidity.

### Example 7

A carbon material comprising particles having a coarsely granular surface was produced in the same manner as that in Example 6 except that the treatment temperature was changed from 550°C to 350°C and that the operation period of time was changed from eight hours to six hours. As a result, there was ejected a carbon material comprising particles having a coarsely granular surface and having an average particle diameter of 3 mm at a rate of 9.5 g per minute. The carbon material had an oxygen content of 13 % by weight. When the carbon material was shaken in a sample tube, the carbon material showed no powdering and no dusting. The carbon material was excellent in fluidity.

### Comparative Example 1

Example 1 was repeated except that the air atmosphere was replaced with a nitrogen atmosphere. As a result, the pitch which was added was molten and integrated with the carbonaceous particles which were placed in advance, so that the treatment could not be carried out.

### Comparative Example 2

Example 6 was repeated except that the air atmosphere was replaced with a nitrogen atmosphere. As a result, obtained carbonaceous particles involved spherical particles and crushed particles and the carbonaceous particles showed a large particle size distribution.

## Claims

1. A carbon material derived from mesophase pitch as a main raw material, which carbon material comprises particles which consist of a core particle and at least two granular carbonaceous projections therefrom, the projections having a diameter not more than the minimum particle diameter, the carbon material having an oxygen content of 0.1 % by weight or more.

2. A carbon material according to claim 1, wherein the mesophase pitch is petroleum pitch, coal pitch or synthetic pitch.

3. A carbon material according to claim 1, wherein the mesophase pitch is obtainable by polymerizing a condensed polycyclic aromatic hydrocarbon or a material containing a condensed polycyclic aromatic hydrocarbon in the presence of hydrogen fluoride and boron trifluoride.

4. A carbon material according to any one of the preceding claims, wherein the mesophase pitch has a softening point of at least 150°C according to a flow tester method and an optically anisotropic content of at least 50 %.

5. A carbon material according to any one of the preceding claims, which is composed of the mesophase pitch and carbonaceous particles which are not molten at a temperature below that at which the mesophase pitch is produced.

6. A carbon material according to any one of the preceding claims, which is composed of the mesophase pitch and carbonaceous particles obtained from the mesophase pitch.

7. A carbon material according to any one of the preceding claims, which is entirely derived from the mesophase pitch.

8. A process for the production of a carbon material, according to any of the preceding claims which process comprises
(a) heating carbonaceous particles to from 200 to 600°C under an inert gas atmosphere with stirring
(b) changing the inert gas atmosphere to an oxidizing atmosphere containing at least 0.1 % by mole of oxygen and/or NO_{2;}
(c) adding mesophase pitch in a solid state or a molten state into the carbonaceous particles while stirring, and
(d) stirring the thus obtained mixture at a temperature of from 200 to 600°C.

9. A process according to claim 8, wherein the carbon material is continuously produced by continuing adding the mesophase pitch.

10. A process according to claim 9, wherein the carbon material is continuously produced by continuing adding the carbonaceous particles together with the continuous addition of the mesophase pitch.

11. A process according to any one of claims 8 to 10, wherein the carbonaceous particles are produced from the mesophase pitch.

12. A process according to any one of claims 8 to 11, wherein the carbonaceous particles are formed of a carbonaceous substance which is not molten at a temperature below that at which the mesophase pitch is produced.

13. A process according to any one of claims 8 to 12, wherein the carbonaceous particles have an average particle diameter of 30 to 1,000 nm.

## Patentansprüche

1. Kohlenstoffmaterial, das aus Mesophasen-Pech als Hauptrohstoff stammt, wobei dieses Kohlenstoffmaterial Partikel umfasst, die aus einem Kernpartikel und mindestens zwei körnigen, kohlenstoffhaltigen, daraus hervortretenden Vorsprüngen bestehen, wobei die Vorsprünge einen Durchmesser haben, der nicht mehr als der Mindestdurchmesser der Partikel beträgt, wobei das Kohlenstoffmaterial einen Sauerstoffgehalt von 0,1 Gew.-% oder mehr aufweist.

2. Kohlenstoffmaterial gemäß Anspruch 1, wobei das Mesophasen-Pech Erdölpech, Kohlepech oder synthetisches Pech ist.

3. Kohlenstoffmaterial gemäß Anspruch 1, wobei das Mesophasen-Pech durch Polymerisation eines kondensierten polyzyklischen aromatischen Kohlenwasserstoffs oder einem Material, das einen kondensierten polyzyklischen aromatischen Kohlenwasserstoff enthält, in Gegenwart von Fluorwasserstoff und Bortrifluorid gewonnen werden kann.

4. Kohlenstoffmaterial gemäß einem der vorhergehenden Ansprüche, wobei das Mesophasen-Pech einen Erweichungspunkt von mindestens 150°C gemäß einem Fließtestverfahren und einen optisch anisotropen Gehalt von mindestens 50 % aufweist.

5. Kohlenstoffmaterial gemäß einem der vorhergehenden Ansprüche, das aus dem Mesophasen-Pech und kohlenstoffhaltigen Partikeln, die nicht bei einer Temperatur schmelzen, die unterhalb der liegt, bei der das Mesophasen-Pech hergestellt wird, zusammengesetzt ist.

6. Kohlenstoffmaterial gemäß einem der vorhergehenden Ansprüche, das aus dem Mesophasen-Pech und kohlenstoffhaltigen Partikeln, die aus dem Mesophasen-Pech gewonnen wurden, zusammengesetzt ist.

7. Kohlenstoffmaterial gemäß einem der vorhergehenden Ansprüche, das gänzlich aus dem Mesophasen-Pech stammt.

8. Verfahren zur Herstellung eines Kohlenstoffmaterials gemäß einem der vorhergehenden Ansprüche, wobei das Verfahren umfasst
(a) Erhitzen kohlenstoffhaltiger Partikel auf 200 bis 600°C in einer Inertgasatmosphäre unter Rühren;
(b) Änderung der Inertgasatmosphäre in eine oxidierende Atmosphäre, die mindestens 0,1 Mol-% Sauerstoff und/oder NO₂ enthält;
(c) Zugabe von Mesophasen-Pech in festem Zustand oder in geschmolzenem Zustand zu den kohlenstoffhaltigen Partikeln während gerührt wird, und
(d) Rühren des so erhaltenen Gemisches bei einer Temperatur zwischen 200 und 600°C.

9. Verfahren gemäß Anspruch 8, wobei das Kohlenstoffmaterial durch kontinuierliche Zugabe des Mesophasen-Pechs kontinuierlich hergestellt wird.

10. Verfahren gemäß Anspruch 9, wobei das Kohlenstoffmaterial durch kontinuierliche Zugabe der kohlenstoffhaltigen Partikel zusammen mit der kontinuierlichen Zugabe des Mesophasen-Pechs kontinuierlich hergestellt wird.

11. Verfahren gemäß einem der Ansprüche 8 bis 10, wobei die kohlenstoffhaltigen Partikel aus dem Mesophasen-Pech hergestellt sind.

12. Verfahren gemäß einem der Ansprüche 8 bis 11, wobei die kohlenstoffhaltigen Partikel aus einem kohlenstoffhaltigen Stoff gebildet sind, der nicht bei einer Temperatur schmilzt, die unterhalb der liegt, bei der das Mesophasen-Pech hergestellt wird.

13. Verfahren gemäß einem der Ansprüche 8 bis 12, wobei die kohlenstoffhaltigen Partikel einen durchschnittlichen Teilchendurchmesser von 30 bis 1000 nm haben.

## Revendications

1. Matériau carboné, dérivé d'une matière première qui est principalement un brai à phase mésomorphe, lequel matériau carboné comprend des particules constituées chacune d'une particule de coeur et d'au moins deux saillies carbonées granuleuses, dont le diamètre n'est pas supérieur au diamètre minimal des particules, et lequel matériau carboné présente une teneur en oxygène d'au moins 0,1 % en poids.

2. Matériau carboné conforme à la revendication 1, pour lequel le brai à phase mésomorphe est un brai de pétrole, un brai de charbon ou un brai synthétique.

3. Matériau carboné conforme à la revendication 1, pour lequel le brai à phase mésomorphe est accessible par polymérisation d'un hydrocarbure aromatique polycyclique à cycles condensés ou d'une matériau contenant un hydrocarbure aromatique polycyclique à cycles condensés, en présence de fluorure d'hydrogène et de trifluorure de bore.

4. Matériau carboné conforme à l'une des revendications précédentes, pour lequel le brai à phase mésomorphe présente un point de ramollissement, mesuré à l'aide d'un appareil à essai d'écoulement, d'au moins 150 °C, et une teneur en composants optiquement anisotropes d'au moins 50 %.

5. Matériau carboné conforme à l'une des revendications précédentes, qui se compose du brai à phase mésomorphe et de particules carbonées qui ne fondent pas à une température inférieure à celle à laquelle est produit le brai à phase mésomorphe.

6. Matériau carboné conforme à l'une des revendications précédentes, qui se compose du brai à phase mésomorphe et de particules carbonées obtenues à partir de ce brai à phase mésomorphe.

7. Matériau carboné conforme à l'une des revendications précédentes, qui dérive entièrement du brai à phase mésomorphe.

8. Procédé de production d'un matériau carboné conforme à l'une des revendications précédentes, lequel procédé comporte les étapes suivantes:
a) chauffer des particules carbonées à une température de 200 à 600 °C, sous atmosphère de gaz inerte, tout en les agitant ;
b) changer l'atmosphère de gaz inerte en une atmosphère oxydante contenant au moins 0,1 % en moles d'oxygène et/ou de dioxyde d'azote NO₂ ;
c) ajouter aux particules carbonées, tout en continuant à les agiter, un brai à phase mésomorphe, à l'état solide ou à l'état fondu ;
d) et brasser le mélange ainsi obtenu à une température de 200 à 600 °C.

9. Procédé conforme à la revendication 8, dans lequel on produit le matériau carboné en mode continu, en ajoutant continuellement du brai à phase mésomorphe.

10. Procédé conforme à la revendication 9, dans lequel on produit le matériau carboné en mode continu, en ajoutant continuellement aussi bien des particules carbonées que du brai à phase mésomorphe.

11. Procédé conforme à l'une des revendications 8 à 10, pour lequel les particules carbonées sont produites à partir du brai à phase mésomorphe.

12. Procédé conforme à l'une des revendications 8 à 11, pour lequel les particules carbonées sont formées d'une substance carbonée qui ne fond pas à une température inférieure à celle à laquelle est produit le brai à phase mésomorphe.

13. Procédé conforme à l'une des revendications 8 à 12, dans lequel les particules carbonées présentent un diamètre moyen de 30 à 1000 nm.
